# EUROPEAN PATENT APPLICATION

(11) **EP 1 152 619 A2**
(43) Date of publication of application: **07.11.2001**
(21) Application number: 01850076.9
(22) Date of filing: 27.04.2001
(51) Int. Cl.: H04N 7/24

(54) **Method, device and system for digital communication**

(30) Priority: 03.05.2000 SE 0001616
(71) Applicant: Nokia Corporation, 02150 Espoo (FI)
(72) Inventor: Kalhour, Morteza, 58331 Linköping (SE)
(74) Representative: Estreen, Lars

(57) **Abstract**

A method for creating a push mechanism in a digital communication system comprises the following steps: creating a graphical object having associated therewith timing and positioning information, executing a first software application associated with the graphical object, wherein the first software application working in response to a predetermined event connected to the positioning information associated with the graphical object, and launching a second software application by means of the first software application in response to the predetermined event. The method is characterized in that the timing information is provided as a time stamp in an elementary stream of digital information.

## Description

### FIELD OF INVENTION

The present invention relates generally to a method and a computer terminal for obtaining a real push function in a communication system, such as a system for broadcasting of digital video information.

### BACKGROUND

Interactive television systems capable of two-way communication between computer systems operating as information service providers, in particular Internet service providers, and networked Integrated Receiver Decoders (IRDs) are becoming increasingly popular. Such systems open up for new services and features for television users. A standard developed by the Project on Digital Video Broadcasting is the so-called Digital Video Broadcasting standard or simply DVB standard. Its main intent is to reap the benefits of technical standardisation. For more information regarding the DVB standard, reference is made to the publication "Digital Television MPEG 1 MPEG 2 And principles of the DVB System", H Benoit, ISBN 0-471-23810-4, or to the DVB Home Page on the Internet: http://www.dvb.org.

An alternative to cable and analogue satellite reception is to utilise a fixed dish focused on one or more geostationary satellites. Digital broadcast system (DBS) units are able to receive multiple channels of multiplexed video and audio signals as well as programming information, E-mail, and related data. DBS typically uses MPEG-2 encoding and COFDM transmission.

Internet access is based on the idea that the users access the desired web sites and retrieve the information needed. However, if the information needed is unavailable, a user has to access the web site again to retrieve the information at a later time. This procedure is repeated until the requested information is available. Thus, a drawback is that the Internet does not support a function that sends the information automatically to the user once it is available.

There have recently been some attempt to create a fake "push" mechanism based on polling by the client but this approach is not even suitable for conventional type of Internet access and therefore even more inappropriate for broadcasting.

Another known solution is to have a "Demon" listening to a specific http address, checking whether a change has been made and retrieving new information, such as new e-mail. This solution means unnecessary loading of the system.

Yet another known solution has been implemented in the ATVEF standard (ATVEF - Advanced Television Enhancement Forum). According to ATVEF, it is possible, in a digital network, to send URLs and content to a terminal, such as a set top box. However, ATVEF uses a purely IP based mechanism not using audio and video information or the synchronisation thereof. Because of that, in order to use the ATVEF push mechanism, special equipment is needed, such as new head-end equipment on the Service Provider side and additional software components on the receiver side. Also, a proper and working synchronisation mechanism is lacking in the ATVEF solution. As an example, it is not possible to send a bit map together with text information and be sure that the information is presented at exactly the right time. Also, it is not possible to launch an application with the ATVEF function; it is simply a link to a home page. This is described in the international patent application PCT/US97/18664 (WO9817064) in the name of Gemstar Development Corporation.

### OBJECT OF THE INVENTION

An object of the present invention is to overcome the problems associated with prior art and to provide a real push mechanism in a digital communication system.

### SUMMARY OF THE INVENTION

The invention is based on the realisation that the backbone of the DVB or DBS, such as Multiprotocol Encapsulation and subtitling, can be used to create a real push mechanism so that the client application is notified of the availability of the requested information without the need for polling.

According to the invention there is provided a method for creating a push mechanism in a digital communication system according to claim 1 and a system for carrying out the method according to claim 14. There is also provided a computer terminal as defined in claim 12, a computer program product directly loadable into the internal memory of a digital computer as defined in claim 15 and a computer program product stored on a computer readable storage medium as defined in claim 16.

With the invention, both synchronisation and interaction are achieved in a communication system, such as a system complying with the DVB standard.

### BRIEF DESCRIPTION OF DRAWINGS

The invention is now described, by way of example, with reference to the accompanying drawings, in which:
FIG. 1 is conceptual model of a DVB (MPEG-2) baseband processor used for transmitting information,
FIG. 2 is an overall diagram of a communication system embodying the invention, and
FIG. 3 is conceptual model of a DVB (MPEG-2) baseband processor used for receiving information.

### DETAILED DESCRIPTION OF THE INVENTION

In the following, a detailed description of a preferred embodiment of the invention will be given. Because the invention mainly relates to the DVB standard, the nomenclature used in this description is adapted to the DVB. Thus, in the following, a "service" is equivalent to a "television channel" or a "radio channel", for example. Similarly, an "event" is equivalent to a traditional "television programme" or "radio programme".

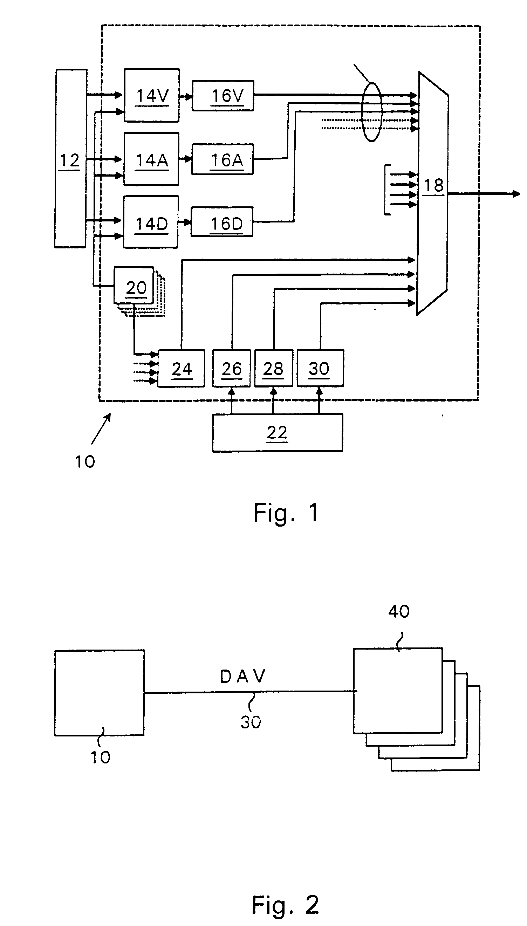

Reference is first made to figure 1, which is a conceptual model of a DVB (MPEG-2) transmitting baseband processor, generally designated 10. In the present example, the transmitting processor 10 is located at a so-called Service Provider, i.e., a party providing services like TV channels. As can be seen from the figure, the input to the processor consists mainly of a number of program sources 12. Each programme source comprises any mixture of raw data and uncompressed video and audio, where the data can be, for example, teletext and/or subtitling information and graphical information such as logos. Each of the video, audio and programme-related data inputs is encoded by means of a respective encoder 14V, 14A, and 14D, and formatted into a Packetized Elementary Stream (PES) by means of a respective packetizer 16V, 16A, and 16D. Thus, each PES is a digitally encoded component of a programme. The input data comes from user equipment, such as cameras for digital video recording, sound equipment for audio and a computer for processing digital data.

The simplest type of service is a radio channel, which would consist of a single audio elementary stream. A traditional television broadcast would comprise three elementary streams: one carrying coded video, one carrying coded stereo audio and one carrying teletext.

Following packetization, the various elementary streams of a programme are multiplexed with packetized elementary streams from other programmes by means of a Transport Multiplexer 18 to form a Transport Stream (TS).

Each of the Packetized Elementary Streams can carry timing information, or "time stamps", to ensure that related elementary streams are replayed in synchronism in the decoder. Programmes can each have a different reference clock, or can share a common clock, referenced 20. Samples of each "Programme Clock", called Programme Clock References (PCRs), are inserted into the Transport Stream to enable the decoder to synchronise its clock to that in the multiplexer 18. Once synchronised, the decoder can correctly interpret the time stamps and can determine the appropriate time to decode and present the associated information to the user.

Additional data 22 is inserted into the Transport Stream, which includes Programme Specific Information (PSI) 24, Service Information (SI) 26, Conditional Access (CA) data 28 and Private data 30, see figure 1. Private data is a data stream, the content of which is not specified by the standard and can be used freely.

The backbone of the system will now be briefly discussed with reference to figure 2. The backbone comprises a number of communication paths 30, one of which is shown in figure 2. The transmission medium supports high-speed transmission of digital information, such as audio (A), video (V) and data (D). A number of users, such as the baseband processor 10 shown in figure 1, are connected to the backbone. In the present example, a first baseband processor user 10 functions as a transmitter of information and a second user 40 as a receiver of information.

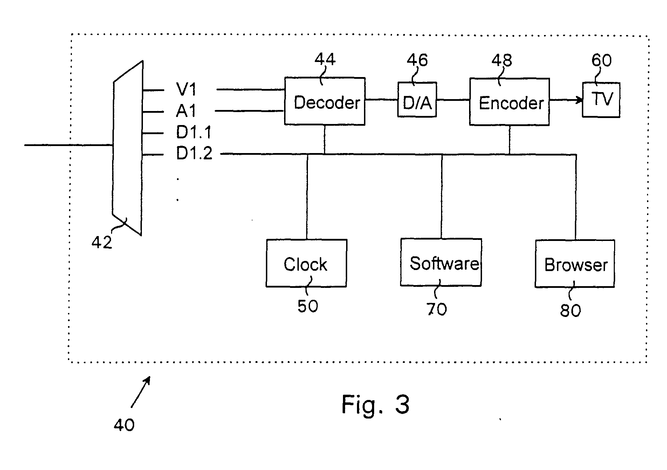

A method covered by a standard, such as MPE, Multiprotocol Encapsulation, is used to send the information to the receiver 40 through receiver equipment, which will now be discussed with reference to figure 3. The transport stream arriving from the transmission medium is first demultiplexed in a Transport Demultiplexer 42, splitting the information into several programme streams comprising related elementary streams, four of which are shown as an example. The exemplary streams comprise a video stream V1, an audio stream A1 and two data streams D1.1, D1.2. This information results in a TV programme, for example.

The video and audio streams are directed to a video and audio decoder 44, wherein the signals are decoded. The decoded audio and video signals are synchronised in the decoder 44 by means of the PTS. This synchronisation is carried out in hardware.

The decoded signals are input to a digital to analogue (D/A) converter 46, wherein the digital information is converted to analogue form useable by a TV encoder, such as a PAL encoder 48. The encoder 48 supplies the encoded information to a presentation unit, in this case a TV set 60, on which the information is displayed.

The data information can comprise several kinds of information. An example thereof is DVB subtitling information. This information can be in the form of text or bit maps etc. and is therefore suitable for use with the present invention. The subtitling information includes presentation information in order to synchronise it with audio and video information and is sent in a special way in the PES packets. The actual data, or in other words the content (sent by e.g. MPE) can be buffered in the decoder until the presentation time, which can be e.g. 10 minutes later or more. There is also a Decode time stamp (DTS) indicating when the information is to be decoded. The synchronisation also applies to data application, such as a browser 80.

In order to keep track of time, the receiver 40 also comprises a clock reference 50. This clock is adjusted in accordance with timing signals sent by the transmitting processor 10, e.g., the Service Provider. The time values of the clock 50 correspond to the PTS values of the incoming information. Thus, if the clock 50 has the value "100" and the PTS of the incoming information is "150", there is a delay of 50 time periods until the incoming information is presented. A signal is then sent from a monitoring module to the application when an event is to be started. As already mentioned, the audio and video information is synchronised automatically in the decoder 44.

Thus, the receiver software uses the time stamps to synchronise the presentation of an announcement with video/audio and present it to the user at exact the right moment. Different methods are available for the client software to present the announcement to the user in a very satisfactory way. As an example, bitmaps for the presentation of an announcement, like an icon on the screen, can be sent together with it, whereby exact positioning of the icon can be achieved. In addition, different effects, such as animations, can be obtained by direct control of the broadcaster. Alternatively, simple audio effects may be achieved.

Another kind of data is the unsynchronised Service Information (SI). This information is sent in the transport stream from where it is extracted.

Data synchronisation information is received through another data channel, in the present example D1.2. This information is supplied to an application 70, e.g. a DVB subtitling application. DVB subtitling is a broadcaster using PES packets. By means of this function, an exact frame synchronisation may be achieved.

A simplified version of the DVB subtitling is used to send an announcement of content availability to the user.

Hence, the concept requires transmission of two types of data. The first one is the content sent by the means of e.g. MPE. The content can be web page in Hypertext Markup Language (HTML) format, a complete executable application or some input to an already resident application in the receiver, etc. The second data type to be transmitted is the so-called triggers announcing the availability of the content or automatically starting the execution of it.

The push application according to the invention will now be described in more detail. The subtitling application according to DVB is not used. However, the transfer mechanism used by the subtitling is used.

First, a bitmap is defined together with associated data, such as reference to the content (like URL), some option executable code and presentation position on a screen etc. Thus, it is a graphical element as such without any special restrictions. Thus, what is used from the DVB standard is the time stamp, positioning and graphics.

During an event, e.g. when an icon is shown on a TV screen during a particular TV show, a pure software application can be launched by selecting the icon on the screen. This selection triggers an event that in turn activates another application.

Thus, the receiver should contain an application monitoring the arrival of triggers. By analysing the content of the trigger, this application will know when the trigger should be launched. Once the PTS of the current DVB stream matches the launch time of the trigger, it will be invoked by this application. The invocation of the trigger may result in URL (previously cached from the MPE stream) being presented in a browser context or an executable application being started (also cached from the MPE) or the trigger data being passed to an already existing application (e.g. using MIME types or similar mechanisms).

The launched application can be any application, such as the web browser 80. In that case, the event triggers the browser by means of a URL. An other example is to invoke a resident software application which starts to retrieve software update information from the Service Provider and install new components if they are available (some kind of smart update). Alternatively, a chat programme can be started with a topic connected to the TV programme currently shown.

Another alternative is to show an icon on the screen of the TV set 60 during a short time interval, e.g., one second. If the viewer manages to select the icon, he/she is participating in a lottery, for example. The possibilities are endless.

The push application can also be connected to underlying UHTTP mechanisms (UHTTP - Unidirectional Hypertext Transfer Protocol - a simple, robust, one-way resource transfer protocol that is designed to efficiently deliver resource data in a one-way broadcast-only environment). Thus, the push application uses a protocol with a format comprising e.g. UHTTP or HTTP link information.

The software application running is provided in the receiver but can be downloaded/updated at any time. It can also be a multipurpose application displaying an icon and launching other applications.

An application tuning to a different service opens all elementary streams needed for the new service, i.e., audio, video and data streams. In case of multiple streams, such as several data streams with different subtitling languages, user preferences stored in the receiver determine which streams to use.

Hence, by using already existing DVB mechanisms, different streams for different languages may be constructed and the choice of different trigger streams and content may be based on the user preferences.

In case the user wants to deselect the push mechanism, the push application is simply stopped by a simple menu selection.

The push application according to the invention does not interfere with the normal DVB subtitling function as they are transmitted with different PID values. This is a very important aspect of the invention, as the DVB subtitling function per se is not used. In other words, it is not any subtitling information that will be presented to the user. The innovation only uses the transport mechanism and standard methods used by the DVB subtitling in order to deliver the trigger data to the receiver. The monitoring application (mentioned above) receives the trigger information and interpret it accordingly (not as subtitling information).

In the case of an icon, once it is presented to the user, he/she may start a procedure by clicking on it. The procedure can involve displaying the content of the icon.

However, the procedure is not limited to data within the broadcast stream. In the present example, the user equipment is connected to the Internet through e.g. a modem. When the user clicks on the icon, the application software connects to a specified web site on the Internet. Depending on the icon content, different procedures are initiated. As an example, the procedures could involve ordering goods from an Internet vendor. Thus, in case of a bookshop advertisement, a number of icons displaying books are shown. By clicking on one of the book icons, the book is ordered through the Internet.

A preferred embodiment of the invention has been described. It is realised that it can be varied within the scope of the appended claims. Thus, PTS has been described as the means for determining the presentation time. However, corresponding information, such as Normal Presentation Time (NTP) information can be used as well.

A communication system using the DVB standard has been described. It is realised that a non-DVB system can be used as a platform for the push mechanism according to the invention as long as the synchronisation features incorporated in the DVB standard are used.

## Claims

1. A method for creating a push mechanism in a digital communication system, comprising the following steps:
a) creating a graphical object having associated therewith timing and positioning information,
b) executing a first software application associated with said graphical object, said first software application working in response to a predetermined event connected to said positioning information associated with said graphical object, and
c) launching a second software application by means of said first software application in response to said predetermined event,
**characterized in that**
- said timing information is provided as a time stamp in an elementary stream of digital information.

2. The method according to claim 1, wherein said digital information comprises subtitling information.

3. The method according to claim 2, wherein said subtitling information follows the Digital Video Broadcasting (DVB) standard.

4. The method according to any of the preceding claims, wherein said digital information comprises information in Hypertext Markup Language (HTML) format.

5. The method according to any of the preceding claims, wherein said digital information is transmitted by means of Multi Protocol Encapsulation (MPE).

6. The method according to any of the preceding claims, wherein said graphical object has associated therewith a reference to a content, preferably a Universal Resource Link (URL).

7. The method according to claim 6, wherein said reference to the content is cached from an MPE stream.

8. The method according to any of the preceding claims, wherein said second software application is a web browser.

9. The method according to any of the preceding claims, wherein said second software application is an application retrieving software update information, preferably from a Service Provider.

10. The method according to any of the preceding claims, wherein said second software application is adapted to start a chat programme.

11. The method according to any of the preceding claims, wherein said timing information comprises Normal Presentation Time (NPT) information.

12. A computer terminal (40) arranged to perform a method for creating a push mechanism in a digital communication system, comprising the following steps:
a) receiving a graphical object having associated therewith timing and positioning information,
b) executing a first software application associated with said graphical object, said first software application working in response to a predetermined event connected to said positioning information associated with said graphical object, and
c) launching a second software application by means of said first software application in response to said predetermined event,
**characterized in that**
said timing information is provided as a time stamp in an elementary stream of digital information.

13. The terminal (40) according to claim 12, wherein said terminal is an Integrated Receiver Decoder (IRD) or Set-top Box (STB).

14. A system implementing a digital communication push mechanism, said system comprising a baseband processor (10) and at least one receiver (40) interconnected by a communication path (30), wherein said baseband processor and said at least one receiver are adapted for performing the method according to any of claims 1-11.

15. A computer program product directly loadable into the internal memory of a digital computer comprising software code portions for performing the following steps when said product is run on a computer:
a) receiving a graphical object having associated therewith timing and positioning information,
b) executing a first software application associated with said graphical object, said first software application working in response to a predetermined event connected to said positioning information associated with said graphical object, and
c) launching a second software application by means of said first software application in response to said predetermined event,
**characterized in that**
said timing information is provided as a time stamp in an elementary stream of digital information.

16. A computer program product stored on a computer readable storage medium, comprising computer readable program code means for causing a computer to perform the following steps:
a) receiving a graphical object having associated therewith timing and positioning information,
b) executing a first software application associated with said graphical object, said first software application working in response to a predetermined event connected to said positioning information associated with said graphical object, and
c) launching a second software application by means of said first software application in response to said predetermined event,
**characterized in that**
said timing information is provided as a time stamp in an elementary stream of digital information.
